# EUROPÄISCHE PATENTSCHRIFT

(11) **EP 1 304 495 B1**
(45) Veröffentlichungstag und Bekanntmachung des Hinweises auf die Patenterteilung: **19.04.2006**
(21) Anmeldenummer: 02016146.9
(22) Anmeldetag: 20.07.2002
(51) Int. Cl.: F16D 43/202, F16D 7/04

(54) **Drehmomentbegrenzungskupplung**
Torque limiting coupling
Accouplement à limitation de couple

(30) Priorität: 19.10.2001 DE 10151162
(43) Veröffentlichungstag der Anmeldung: 23.04.2003
(73) Patentinhaber: GKN Walterscheid GmbH, 53797 Lohmar (DE)
(72) Erfinder: Carstensen, Bernd, 53809 Ruppichteroth (DE); Sarfert, Andreas, 53129 Bonn (DE); Wilks, Eberard, 56307 Daufenbach (DE); Schott, Wilhelm, 50996 Köln (DE); Kohnen, Gottfried, 50670 Köln (DE)
(74) Vertreter: Harwardt, Günther

(56) Entgegenhaltungen:
- CH-A- 243 403
- DE-A- 4 137 829
- DE-C- 3 205 513
- DATABASE WPI Section PQ, Week 198025 Derwent Publications Ltd., London, GB; Class Q63, AN 1980-F5327C XP002274302 -& SU 696 198 A (KUTOVSKII A G) 5. November 1979 (1979-11-05)

## Beschreibung

Die Erfindung betrifft eine Drehmomentbegrenzungskupplung, insbesondere zum Antrieb von oder in Antrieben von landwirtschaftlichen Geräten oder Arbeitsmaschinen.

Aus der DE 41 37 829 C2 ist eine gattungsgemäße Drehmomentbegrenzungskupplung bekannt, bei der auf einer Längsachse zentriert umeinander eine Kupplungsnabe und eine Kupplungshülse angeordnet sind. Die Kupplungshülse weist eine kreiszylindrische Lagerbohrung auf, in der die Kupplungsnabe mit ihrer kreiszylindrischen Außenfläche drehbar gelagert ist. An der Außenfläche der Kupplungsnabe sind umfangsverteilt schlitzartige erste Ausnehmungen angebracht, welche jeweils durch zwei parallele Führungsflächen begrenzt sind. Diese bilden eine Stellachse und gehen von der Außenfläche aus. In den schlitzartigen Ausnehmungen ist jeweils ein erster Mitnehmer verstellbar entlang der Stellachse aufgenommen. Die Mitnehmer weisen parallele ebene Anlageflächen auf, mit denen sie zwischen den beiden parallelen Führungsflächen geführt sind. Die Mitnehmer sind in eine über die Außenfläche der Kupplungsnabe vortretende Drehmomentübertragungsposition und eine in diese zurückgezogene Abschaltposition verstellbar. Für die einzig vorgesehene Antriebsdrehrichtung weist jeder Mitnehmer zum Kopf hin im Anschluss an die erste Anlagefläche eine Drehmomentübertragungsfläche auf, welche in der Drehmomentübertragungsposition über die Außenfläche der Kupplungsnabe vorsteht und zu einer entsprechenden Stützfläche einer Nut der Kupplungsnabe in Anlage ist. Die Drehmomentübertragungsfläche nimmt zu der ersten Anlagefläche einen stumpfen Winkel ein. Entsprechend geneigt verläuft auch die Stützfläche in der Nut. Die der Stützfläche gegenüberliegende Seitenfläche der Nut verläuft entsprechend der zur ersten Anlagefläche parallelen zweiten Anlagefläche des Mitnehmers. Der Stützfläche ist in Antriebsdrehrichtung eine Fase vorgeschaltet. Die vorbeschriebene Ausbildung gilt für sämtliche Nuten in der Kupplungshülse, wobei die Anzahl der Nuten der Anzahl der Mitnehmer entspricht. In jeder Ausnehmung ist an dem der Stützfläche abgewandten Ende jeden Mitnehmers ein Stützkörper angeordnet, der von einer Feder beaufschlagt wird. Jeder Mitnehmer und jeder Stützkörper weist zwei mit unterschiedlichem Winkel angeordnete Flächen auf, die paarweise gegengleich ausgebildet sind und dazu dienen, den Mitnehmer in der Drehmomentübertragungsposition zu stützen und in der Abschaltposition mit einer geringeren Kraft in Richtung zur Drehmomentübertragungsposition zu beaufschlagen als in der Drehmomentübertragungsposition selbst.

Die Drehmomentbegrenzungskupplung dient dazu, den Antrieb eines Gerätes nur mit dem für das Gerät zulässigen Drehmoment zuzulassen. Wenn beispielsweise bei dem landwirtschaftlichen Gerät, in dessen Antriebsstrang ausgehend von der Zapfwelle eines Traktors eine solche Drehmomentbegrenzungskupplung eingeschaltet ist, eine Verstopfung, beispielsweise durch einen aufgenommenen Stein, auftritt, so dass das Gerät blockiert ist, treten die Mitnehmer aufgrund der Anordnung der Drehmomentübertragungsflächen und Stützflächen aus der Drehmomentübertragungsposition in die Abschaltposition zurück, so dass die Kupplungsnabe in Antriebsdrehrichtung schneller rotieren kann als die Kupplungshülse. Erst dann, wenn die Relativdrehzahl der Kupplungsnabe zur Kupplungshülse eine vorbestimmte Drehzahl unterschreitet, steht genügend Zeit zur Verfügung, dass die Mitnehmer bei der Relativdrehung der Kupplungsnabe zur Kupplungshülse wieder in die Nuten eintreten können. Die Abschaltfunktion ist nur in einer Antriebsdrehrichtung gegeben.

Es sind auch Drehmomentbegrenzungskupplungen bekannt (DE 32 05 513 C1), bei denen zwei diametral angeordnete Mitnehmer vorgesehen sind, die durch einen zentral angeordneten Stütznocken beaufschlagt werden. Die Nuten in der Kupplungshülse und die in diese eintretenden Abschnitte der Mitnehmer sind symmetrisch ausgebildet, d.h. sind beide unter einem Winkel zu der benachbarten Anlagefläche geneigt, so dass eine Drehmomentbegrenzungsfunktion in zwei Drehrichtungen möglich ist. Von Nachteil bei dieser Anordnung ist jedoch, dass eine solche Drehmomentbegrenzungskupplung nach Art einer Ratsche arbeitet, d.h. es ist ein häufiges Eintauchen und Austreten der Mitnehmer bei Relativdrehung der Kupplungsnabe zur Kupplungshülse im Überlastfalle die Folge. Dies ist insbesondere beim Einsatz in Maschinen mit hohen Drehmomenten aufgrund der Beschädigung der Kanten der Nuten in der Kupplungshülse im Übergang zu der Lagerbohrung ungünstig, weil eine schnelle Abnutzung eintritt. Eine Drehmomentbegrenzungsfunktion ist jedoch in beiden möglichen Antriebsdrehrichtungen gegeben.

Der Erfindung liegt die Aufgabe zugrunde, eine Drehmomentbegrenzungskupplung zu schaffen, die auch bei einem Antrieb in zwei entgegengesetzten Drehrichtungen eine sichere Drehmomentbegrenzungsfunktion aufweist und bei der das ständige Ein- und Ausrasten und der Verschleiß auf ein Minimum reduziert ist.

Gekennzeichnet ist die erfindungsgemäße Drehmomentbegrenzungskupplung zur Lösung dieser Aufgabe durch
- eine zweite Kupplungsnabe,
   mit einer zweiten Außenfläche,
   die zweite Ausnehmungen aufweist, die von der zweiten Außenfläche ausgehen,
- einen zweiten Mitnehmer je zweiter Ausnehmung,
   der in einer zweiten Ausnehmung zwischen einer über die zweite Außenfläche vortretenden Drehmomentübertragungsposition und einer in die zweite Kupplungsnabe zurückgezogenen Abschaltposition verstellbar geführt ist, und an seinem über die zweite Außenfläche vortretenden Ende eine dritte Drehmomentübertragungsfläche und dieser abgewandt eine vierte Drehmomentübertragungsfläche aufweist,
- mindestens eine zweite Feder je zweitem Mitnehmer, die diesen zur Einnahme der Drehmomentübertragungsposition beaufschlagt und die in der zweiten Kupplungsnabe aufgenommen ist,
- eine einzige Kupplungshülse,
   die eine Lagerbohrung aufweist, in der beide Kupplungsnaben entlang der Längsachse hintereinander mit ihren Außenflächen drehbar aufgenommen sind,
   die in der Lagerbohrung entsprechend den ersten und zweiten Ausnehmungen der beiden Kupplungsnaben verteilt Nuten aufweist, die parallel zur Längsachse verlaufen und jeweils eine an die identisch ausgeführten ersten und dritten Drehmomentübertragungsflächen der ersten und zweiten Mitnehmer angepasste und sich über die Länge der Nut erstreckende Stützfläche aufweist und wobei die der Stützfläche gegenüberliegende Seitenfläche der Nut an den Verlauf der identisch ausgebildeten zweiten Drehmomentübertragungsfläche der ersten Mitnehmer und der vierten Drehmomentübertragungsfläche der zweiten Mitnehmer angepasst ist.

Von Vorteil bei dieser Ausbildung ist, dass zwei identisch ausgebildete Kupplungsnaben genutzt werden können. Auch die Ausbildung der Mitnehmer und der Federn kann identisch sein. Es ist nur eine einzige Kupplungshülse vorzusehen, die auch nur mit einer Art von Nuten versehen zu sein braucht, wobei die Anordnung der Drehmomentübertragungsflächen und der entsprechenden Stützflächen an den Nuten für beide Kupplungsnaben die gleiche Orientierung aufweist. Hierdurch ist es möglich, die Nuten durch Räumen herzustellen. In der ersten Antriebsdrehrichtung erfolgt die Drehmomentübertragung ausgehend von der ersten Kupplungsnabe, d.h. die erste Kupplungsnabe ist das treibende Bauteil über die ersten Mitnehmer und die ersten Drehmomentübertragungsflächen auf die Kupplungshülse und von der Kupplungshülse über die Seitenflächen der Nuten und die vierten Drehmomentübertragungsflächen in voller Höhe auf die zweiten Mitnehmer und von diesen auf die zweite Kupplungsnabe.

Durch die Orientierung der zweiten Drehmomentübertragungsflächen und der zweiten Seitenflächen ist hinsichtlich der zweiten Kupplungsnabe in Verbindung mit der Kupplungshülse und den zweiten Mitnehmern in der ersten Antriebsdrehrichtung keine Drehmomentbegrenzungsfunktion gegeben. Umgekehrt ist bei Antrieb der ersten Kupplungsnabe in der der ersten Antriebsdrehrichtung entgegengesetzten zweiten Antriebsdrehrichtung keine Abschaltfunktion der ersten Kupplungsnabe im Verhältnis zur Kupplungshülse gegeben, da die Drehmomentübertragung durch die zweiten Drehmomentübertragungsflächen der ersten Mitnehmer über die ersten Seitenflächen der Nuten an die Kupplungshülse erfolgt. Die Kupplungshülse wiederum treibt die zweite Kupplungsnabe durch Anlage der den Nuten der Kupplungshülse zugehörigen Stützflächen an den zugehörigen Drehmomentübertragungsflächen der zugehörigen zweiten Mitnehmer, so dass bei Drehmomentübertragung in der zweiten Antriebsdrehrichtung eine Drehmomentbegrenzungsfunktion im Verhältnis der zweiten Kupplungsnabe und der dieser zugeordneten zweiten Mitnehmer zur Kupplungshülse gegeben ist.

In Ausgestaltung der Erfindung ist vorgesehen, dass die ersten Mitnehmer und die zweiten Mitnehmer an ihren in den ersten bzw. zweiten Ausnehmungen angeordneten Enden jeweils zwei mit unterschiedlichen Winkeln im Verhältnis zur ersten bzw. dritten Anlagefläche angeordnete Beaufschlagungsflächen aufweisen und dass je erstem und zweitem Mitnehmer ein Stützkörper mit zwei den Beaufschlagungsflächen entsprechenden Druckflächen vorgesehen ist, der zwischen der ersten bzw. zweiten Feder und dem zugehörigen ersten bzw. zweiten Mitnehmer der ersten bzw. zweiten Kupplungsnabe aufgenommen ist. Bei dieser Ausbildung ist von Vorteil, dass die Kraft, mit der die Mitnehmer zur Drehmomentübertragungsposition hin beaufschlagt werden, gegenüber der Kraft, mit der sie in der Drehmomentübertragungsposition gehalten werden, verringert ist, so dass der Eingriff der Mitnehmer in die Nuten bei Relativdrehung der Kupplungsnaben gegenüber der Kupplungshülse sanfter erfolgt und Beschädigungen der Kanten der Nuten reduziert sind.

In Ausgestaltung ist ferner vorgesehen, dass die ersten und zweiten Federn jeweils in einer Bohrung der zugehörigen ersten bzw. zweiten Kupplungsnabe aufgenommen sind und die Bohrungen zur zugehörigen ersten oder zweiten Ausnehmung offen sind. Der Stützkörper ist vorzugsweise in der ersten bzw. zweiten Ausnehmung aufgenommen.

Von besonderer Bedeutung ist ferner, dass die Lagerbohrung zu den Stützflächen der Nuten hin jeweils mit einer Fase versehen ist, was bewirkt, dass der Weg, den die Mitnehmer bis zum Eingriff in die Nut zurücklegen müssen, vergrößert ist, so dass die aufgrund der Kraft der Federn erreichbare Beschleunigung zeitlich nicht ausreicht, diese in die Drehmomentübertragungsposition zu überführen, da die Mitnehmer in diesem Zeitraum bereits die Nuten bei der Relativdrehung passiert haben und auf die Fase auftreffen.

Um zu verhindern, dass sich die beiden Kupplungsnaben gegenseitig beeinflussen bzw. die Bewegung der ersten und zweiten Mitnehmer beeinflusst wird, ist zwischen der ersten Kupplungsnabe und der zweiten Kupplungsnabe eine Trennscheibe angeordnet. Diese Trennscheibe sollte vorzugsweise durchgehend ausgebildet sein, so dass beide voneinander vollkommen getrennt sind.

An den der Trennscheibe abgewandten Stirnflächen bzw. den aneinander abgewandten Stirnflächen der ersten Kupplungsnabe und der zweiten Kupplungsnabe ist je eine Stützscheibe angeordnet. Die Stützscheiben werden durch Sicherungsringe, die an der Kupplungshülse fixiert sind, gehalten. Die Stützscheiben decken die Stirnflächen der beiden Kupplungsnaben ab und führen darüber hinaus die Mitnehmer zusammen mit der Trennscheibe.

Ferner sind die erste und die zweite Kupplungsnabe jeweils mit einer Anschlussbohrung versehen, die auf der Längsachse zentriert ist und die verzahnt ist. Diese dient zur Festlegung bzw. Verbindung der jeweiligen Kupplungsnabe mit einer Antriebs- bzw. Abtriebswelle. Von Vorteil ist in diesem Zusammenhang, wenn die Trennscheibe durchgehend gestaltet ist, so dass die Einstecktiefe der anzuschließenden Antriebs- bzw. Abtriebswelle begrenzt ist.

Bei einer ersten Ausführungsform ist vorgesehen, dass die ersten Ausnehmungen und/oder die zweiten Ausnehmungen schlitzartig gestaltet sind und parallel zur Längsachse verlaufen, und dass die ersten Mitnehmer und/oder die zweiten Mitnehmer entsprechend als flache längliche Schieber ausgebildet sind.

In Ausgestaltung dieser Ausführungsform ist vorgesehen, dass die zweite Anlagefläche die zweite Drehmomentübertragungsfläche und dass die vierte Anlagefläche die vierte Drehmomentübertragungsfläche umfassen und jeweils als ebene Flächen gestaltet sind.

Eine weitere Ausführungsform ist dadurch gekennzeichnet, dass zwei erste Mitnehmer und/oder zwei zweite Mitnehmer vorgesehen sind, die jeweils gemeinsam durch zentral angeordnete erste bzw. zweite Stützkörper beaufschlagt sind. Die Gestaltung der Mitnehmer und der Stütznocken sowie der Kupplungsnaben kann beispielsweise so erfolgen, wie dies bei der Drehmomentbegrenzungskupplung gemäß DE - PS 32 05 513 beschrieben ist, auf die hiermit Bezug genommen wird.

Zwei bevorzugte Ausführungsbeispiele der Erfindung sind in der Zeichnung schematisch dargestellt.

Es zeigt
- Figur 1: einen Halblängsschnitt einer erfindungsgemäßen Drehmomentbegrenzungskupplung in einer ersten Ausführungsform,
- Figur 2: einen Schnitt II-II gemäss Figur 1,
- Figur 3: einen Schnitt III-III gemäss Figur 1,
- Figur 4: einen Halblängsschnitt einer erfindungsgemäßen Drehmomentbegrenzungskupplung in einer zweiten Ausführungsform,
- Figur 5: einen Schnitt V-V gemäß Figur 4 und
- Figur 6: einen Schnitt VI-VI gemäß Figur 4.

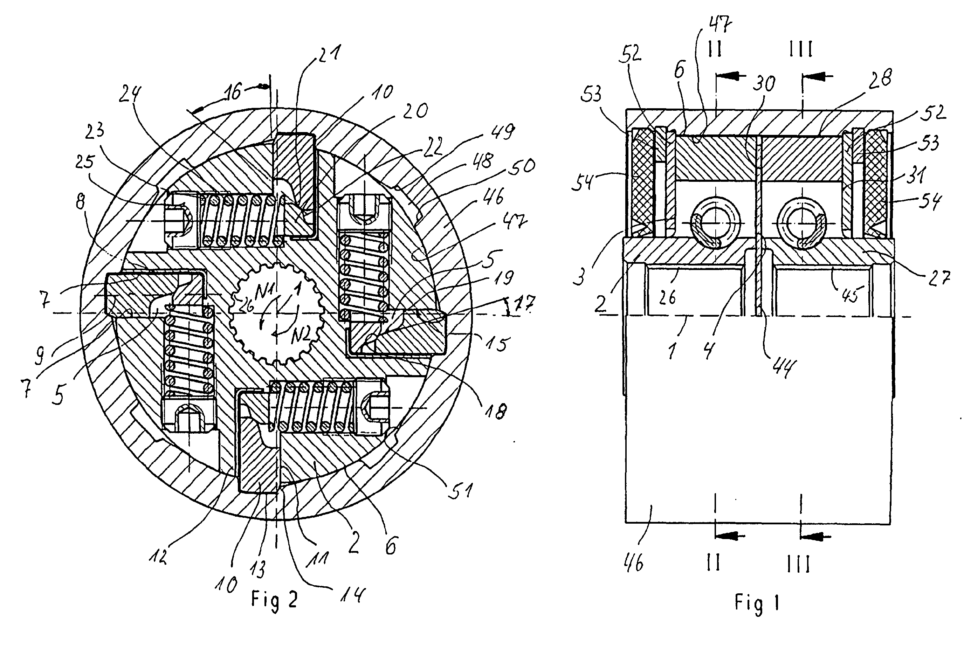

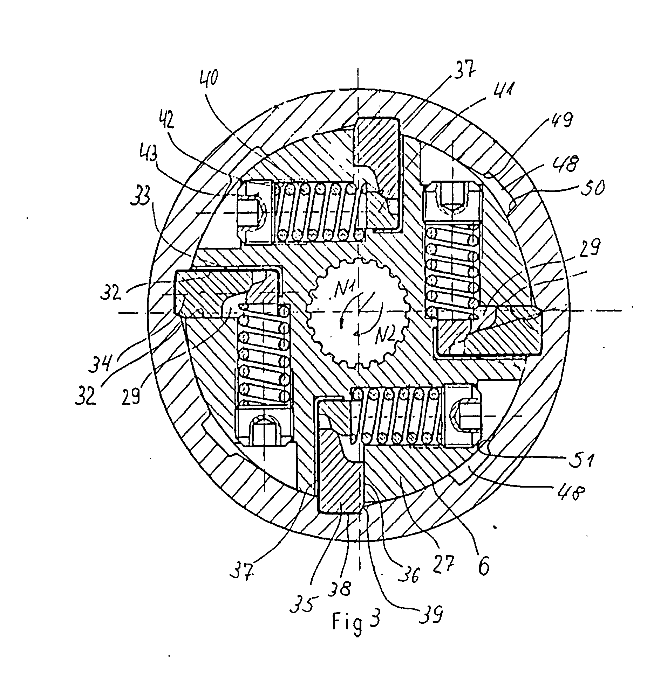

Die Drehmomentbegrenzungskupplung gemäß Figuren 1 bis 3 ist auf einer Längsachse 1 zentriert, um welche die einzelnen Bauteile rotieren und entlang der sie angeordnet sind.

Die Drehmomentbegrenzungskupplung umfasst eine erste Kupplungsnabe 2, welche eine erste Stirnfläche 3 und eine zweite Stirnfläche 4 besitzt. Die erste Außenfläche 6 der ersten Kupplungsnabe 2 ist als Kreiszylinder gestaltet, dessen Achse auf der Längsachse 1 zentriert ist. Ausgehend von der ersten Außenfläche 6 sind in die erste Kupplungsnabe 2 schlitzartige erste Ausnehmungen 5 eingearbeitet. Diese werden durch zwei parallele erste Führungsflächen 7 begrenzt, welche parallel zur Längsachse 1 angeordnet sind und eine erste Stellachse 9 definieren. Die beiden ersten Führungsflächen 7 einer jeden ersten Ausnehmung 5 sind zu einem Radius bezüglich der Längsachse 1 parallel versetzt. Ferner ist in jeder Ausnehmung 5 eine erste Einlage 8 vorgesehen, welche vornehmlich die Abstützung des Drehmomentes übernimmt. Wenn eine solche erste Einlage 8 vorgesehen ist, die die Ausnehmung 5 begrenzt, ist eine der ersten Führungsflächen 7 für einen nachfolgend näher beschriebenen ersten Mitnehmer 10 Teil dieser Einlage 8. Der Mitnehmer weist eine erste Anlagefläche 11 und eine dazu parallele zweite Anlagefläche 12 aufweist. Dieser ist in der ersten Ausnehmung 5 geführt. An dem über die erste Außenfläche 6 vortretenden Abschnitt ist der erste Mitnehmer 10 durch eine erste Kopffläche 13 begrenzt. Zwischen der ersten Kopffläche 13 und der ersten Anlagefläche 11 ist eine erste Drehmomentübertragungsfläche 14 angeordnet. Diese schließt zusammen mit der ersten Anlagefläche 11 einen stumpfen Winkel 15 ein. Die erste Drehmomentübertragungsfläche 14 verläuft parallel zur Längsachse 1. Die zweite Anlagefläche 12 bildet die zweite Drehmomentübertragungsfläche und erstreckt sich daher eben bis zur Kopffläche 13. An dem in der ersten Ausnehmung 5 verbleibenden Abschnitt, d.h. an dem der ersten Kopffläche 13 entgegengesetzten Ende, ist der erste Mitnehmer 10 mit einer ersten Beaufschlagungsfläche 18 und einer zweiten Beaufschlagungsfläche 19 versehen. Die erste Beaufschlagungsfläche 18 ist zu der ersten Anlagefläche 11 unter einem Winkel 16 angeordnet, der größer ist als der Winkel 17, den die zweite Beaufschlagungsfläche 19 zur ersten Anlagefläche 11 einschließt.

Die erste Beaufschlagungsfläche 18 wird in der Drehmomentübertragungsposition des ersten Mitnehmers 10 von einem ersten Stützkörper 20 beaufschlagt, der eine entsprechend gegengleiche erste Druckfläche 21 aufweist. Der erste Stützkörper 20 weist darüber hinaus eine zweite Druckfläche 22 auf, die entsprechend der zweiten Beaufschlagungsfläche 19 verläuft. In einem rechten Winkel zur ersten Stellachse 9 ist in der ersten Kupplungsnabe 2 eine erste Bohrung 23 angebracht, in welcher eine erste Feder 24 in Form einer Druckfeder sitzt, die sich an dem dem ersten Stützkörper 20 entfernten Ende gegen eine Schraube 25 abstützt, die in einen entsprechenden Gewindeabschnitt der ersten Bohrung 23 eingeschraubt ist. Die erste Feder 24 beaufschlagt den zugehörigen ersten Mitnehmer 10 zu der Drehmomentübertragungsposition hin, das ist die über die erste Außenfläche 6 der ersten Kupplungsnabe 2 vortretende Position.

Es ist erkennbar, dass bei dem vorliegenden Ausführungsbeispiel vier derartige Anordnungen mit ersten Mitnehmern 10 vorhanden sind. Sie sind entsprechend der vorbeschriebenen Anordnung gestaltet. Ausgehend von der ersten Stirnfläche 3 der ersten Kupplungsnabe 2 ist entlang der Längsachse 1 hinter der ersten Kupplungsnabe 2 eine zweite Kupplungsnabe 27 angeordnet. Diese entspricht in ihrer Gestaltung der ersten Kupplungsnabe 2, d.h. sie weist ebenfalls eine kreiszylindrische und auf der Längsachse 1 zentrierte zweite Außenfläche 28 auf, in der, wie bei der ersten Kupplungsnabe 2, umfangsverteilt zweite Ausnehmungen 29, die schlitzartig gestaltet sind, angebracht sind. Diese gehen von der zweiten Außenfläche 28 aus und sind zu der dritten Stirnfläche 30 und der vierten Stirnfläche 31 der zweiten Kupplungsnabe 27 offen. Die Begrenzungswände der zweiten Ausnehmungen 29 bilden gegebenenfalls unter Zwischenschaltung einer zweiten Einlage 33 zweite Führungsflächen 32, die parallel zueinander laufen und zwischen sich die zweite Stellachse 34 bilden, entlang der der zweite Mitnehmer 35 zwischen einer über die Außenfläche vortretenden Drehmomentübertragungsposition und einer in diese zurückverlagerten Abschaltposition verlagerbar ist.

Jeder zweite Mitnehmer 35 weist eine dritte Anlagefläche 36 auf, die in Antriebsdrehrichtung N1 der ersten Kupplungsnabe 2 vorne liegt, da auch die zweite Kupplungsnabe 27 dabei in Antriebsdrehrichtung N1 rotiert. Dieser abgewandt ist eine vierte Anlagefläche, die die vierte Drehmomentübertragungsfläche 37 bildet und zu der dritten Anlagefläche 36 parallel verläuft. An dem über die zweite Außenfläche 28 vortretenden Abschnitt ist jeder zweite Mitnehmer 35 durch eine zweite Kopffläche 38 begrenzt, an welche sich in Richtung zur dritten Anlagefläche 36 hin eine dritte Drehmomentübertragungsfläche 39 anschließt, die, wie bei der Ausführung der ersten Mitnehmer 10, miteinander einen stumpfen Winkel einschließen. Die Beaufschlagung in die Drehmomentübertragungsposition erfolgt bei den zweiten Mitnehmern 35 ebenfalls durch mindestens eine zweite Feder 40 je zweitem Mitnehmer 35 unter Zwischenschaltung von jeweils einem zweiten Stützkörper 41, der in jeder zweiten Ausnehmung 29 aufgenommen ist. Jede zweite Feder 40 ist jeweils in einer zweiten Bohrung 42 aufgenommen und stützt sich gegen eine in einen entsprechenden Gewindeabschnitt der zweiten Bohrung 42 eingeschraubte zweite Schraube 43 ab. Zu den miteinander paarweise angeordneten und in Wirkverbindung tretenden Beaufschlagungsflächen an dem der zweiten Kopffläche 38 der zweiten Mitnehmer 35 abgewandten und in den zweiten Ausnehmungen 29 verbleibenden Enden der zweiten Mitnehmer und zu den damit zusammenwirkenden Druckflächen der zweiten Stützkörper 41 wird auf die Beschreibung der entsprechenden ersten Beaufschlagungsfläche 18 sowie zweiten Beaufschlagungsflächen 19 der ersten Mitnehmer 10 und der ersten Druckfläche 21 und zweiten Druckfläche 22 der ersten Stützkörper 20 verwiesen.

Zwischen den beiden Kupplungsnaben 2, 27 ist eine Trennscheibe 44 angeordnet, gegen die sich die erste Kupplungsnabe 2 mit ihrer zweiten Stirnfläche 4 und die zweite Kupplungsnabe 27 mit ihrer dritten Stirnfläche 30 abstützt. Die erste Kupplungsnabe 2 und die zweite Kupplungsnabe 27 werden gemeinsam in einer einzigen Kupplungshülse 46 aufgenommen, die eine kreiszylindrische und auf der Längsachse 1 zentrierte Lagerbohrung 48 aufweist. In dieser Lagerbohrung 48 sind die erste Kupplungsnabe 2 und die zweite Kupplungsnabe 27 mit ihrer ersten Außenfläche 6 bzw. zweiten Außenfläche 28 relativ drehbar um die Längsachse 1 aufgenommen. Neben der ersten Stirnfläche 3 der ersten Kupplungsnabe 2 bzw. der vierten Stirnfläche 31 der zweiten Kupplungsnabe 27 sind Stützscheiben 52 angeordnet, die jeweils in einer Bohrungsstufe der Kupplungshülse 46 in Richtung aufeinander zu gehalten sind und in Richtung voneinander weg durch Sicherungsringe 53, die in entsprechende Nuten der Kupplungshülse 46 eingreifen, festgelegt sind. Darüber hinaus sind Dichtungen 54 vorgesehen, die den Zwischenraum zwischen der Kupplungshülse 46 einerseits und jeweils einer der beiden Kupplungsnaben 2 bzw. 27 abdichten. Diese Dichtungen 54 können je nach Erfordernis auch öldicht gestaltet sein, so dass eine Ölfüllung für die Drehmomentbegrenzungskupplung vorgesehen werden kann, wobei jedoch dann noch zusätzlich öldichte Abdichtungen zwischen den Kupplungsnaben 2 und 27 und der Trennscheibe 44 vorgesehen sein müssen.

In der Lagerbohrung 48 der Kupplungsnabe 46 sind parallel zur Längsachse 1 verlaufend und entsprechend den ersten Mitnehmern 10 und zweiten Mitnehmern 35 umfangsverteilt Nuten 48 angeordnet, die in der ersten Antriebsdrehrichtung N1 der ersten Kupplungsnabe 2 vorne liegend zu der ersten Drehmomentübertragungsfläche 14 der ersten Mitnehmer 10 und der zweiten Drehmomentübertragungsfläche 39 der zweiten Mitnehmer 35 entsprechend gestaltet eine Stützfläche 49 aufweisen. Dieser Stützfläche 49 ist eine Fase 51 vorgeschaltet. Die der Stützfläche gegenüberliegende Seitenfläche 50 einer jeden Nut 48 weist einen Verlauf auf, der dem der damit zusammenwirkenden ersten Anlagefläche 11 eines jeden ersten Mitnehmers 10 bzw. der vierten Anlagefläche 37 eines jeden zweiten Mitnehmers 35 entspricht. Es sind insgesamt acht Nuten 48 im Verhältnis zu vier ersten Mitnehmern 10 bzw. zweiten Mitnehmern 35 vorgesehen, so dass mehrere Einrastpositionen gegeben sind.

Wird die aus den Figuren 1 und 2 ersichtliche erste Kupplungsnabe 2 (von einem nicht dargestellten Antrieb) in der ersten Antriebsdrehrichtung N1 angetrieben, so erfolgt eine Drehmomentübertragung von der ersten Kupplungsnabe 1 über die ersten Mitnehmer 10 und die ersten Drehmomentübertragungsflächen 14 auf die zugehörigen Stützflächen 49 der Nuten 48 und damit auf die Kupplungshülse 46. Das volle Drehmoment wird von der Kupplungshülse 46 bzw. den Seitenflächen 50 der Nuten 48 auf die vierte Drehmomentübertragungsfläche 37 der zweiten Mitnehmer 35 und auf die zweite Kupplungsnabe 27 übertragen. Ein über die erste Anschlussbohrung 26 der ersten Kupplungsnabe 2 eingeleitetes Drehmoment wird so auf das in die zweite Anschlussbohrung 45 der zweiten Kupplungsnabe 27 eingesteckte Abtriebselement bzw. Abtriebswelle übertragen. Von dieser erfolgt dann ein Antrieb eines landwirtschaftlichen Gerätes. Ist dieses Gerät blockiert, beispielsweise dadurch, dass in diesem eine Verstopfung durch Aufnahme eines Steines gegeben ist, dann steht die zweite Kupplungsnabe 27 relativ zur ersten Kupplungsnabe 2 still. Diese rotiert in der ersten Antriebsdrehrichtung N1 weiter. Die Kupplungshülse 26 steht ebenfalls still. Es tritt also eine Relativdrehung zwischen der ersten Kupplungsnabe 2 und der Kupplungshülse 46 auf.

Wenn nun die Verstopfung in dem in der Antriebsdrehrichtung N1 anzutreibenden Gerät aufgehoben werden soll, kann dies beispielsweise durch eine Reversierung der Antriebsdrehrichtung erfolgen. Es erfolgt hierzu beispielsweise ein Antrieb der ersten Kupplungsnabe 2 in einer der ersten Antriebsrichtung N1 entgegengesetzten Antriebsdrehrichtung N2. Dabei erfolgt eine Drehmitnahme der Kupplungshülse 46 über die Abstützung der ersten Mitnehmer 10 mittels ihrer zweiten Drehmomentübertragungsflächen 12 an den Seitenfläche 50 der zugehörigen Nut der Kupplungshülse 46, so dass eine Mitnahme mit dem vollen Antriebsdrehmoment erfolgt. Tritt nun auch bei der der ersten Antriebsdrehrichtung N1 entgegengesetzten zweiten Antriebsdrehrichtung N2 weiterhin eine Blockade dieser Antriebsdrehrichtung in dem anzutreibenden Gerät auf, verbleibt die zweite Kupplungsnabe 27 in Ruhe, d.h. sie dreht sich nicht. Die Kupplungshülse 46, die von der ersten Kupplungsnabe 2 mitgenommen wird, rotiert jedoch relativ zur zweiten Kupplungsnabe 27 weiter, da die zweiten Mitnehmer 35 infolge der Abstützung der Stützfläche 49 der Nuten 48 an den entsprechenden zweiten Drehmomentübertragungsflächen 39 der zweiten Mitnehmer 35 zu einer Verstellung entlang der zweiten Stellachse 34 nach innen, d.h. in die in die zweite Kupplungsnabe 27 zurückgezogene Abschaltposition veranlasst werden. Wird bei beiden Antriebsdrehrichtungen N1 oder N2 jeweils die Antriebsdrehzahl reduziert, können die ersten Mitnehmer 10 bzw. die zweiten Mitnehmer 35 bei entsprechend reduzierter Drehzahl wieder in eine entsprechende Nut 48 der Kupplungshülse 46 eintreten, so dass die Drehmomentübertragungsposition eingenommen wird.

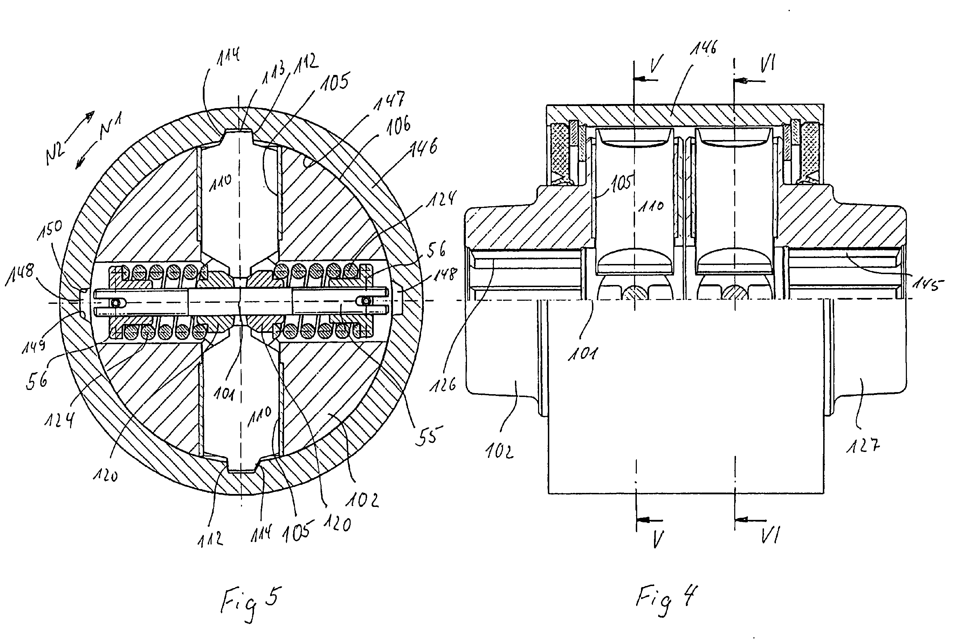

Die Figuren 4 bis 6 zeigen eine zweite Ausführungsform einer Drehmomentbegrenzungskupplung, wobei vergleichbare Ausbildungen und Teile zu der Drehmomentbegrenzungskupplung gemäß Figuren 1 bis 3 mit Positionszeichen versehen sind, die zu denen der Figuren 1 bis 3 um den Zahlenwert 100 erhöht sind. Zur eingehenden Beschreibung wird auf die entsprechende Beschreibung zu den Figuren 1 bis 3 verwiesen. Nachfolgend werden jedoch die Unterschiede näher erläutert.

Die Längsachse, um die sich die Drehmomentbegrenzungskupplung dreht, ist mit 101 bezeichnet. Die Drehmomentbegrenzungskupplung umfasst ebenfalls eine erste Kupplungsnabe 102, die erste Ausnehmungen 105 besitzt, die von der ersten Außenfläche 106 der ersten Kupplungsnabe 102 ausgehen. Sie erstrecken sich radial zur Längsachse 101 und sind in Form von zylindrischen Bohrungen vorgesehen. In diesen ersten Ausnehmungen 105 sind entsprechend zylindrisch gestaltete erste Mitnehmer 110 radial verstellbar geführt. Es sind insgesamt zwei erste Mitnehmer 110 vorgesehen, die auf einer Achse angeordnet sind. Der erste Mitnehmer 110 weist an seinem Kopf, der in Drehmomentübertragungsposition über die erste Außenfläche 106 vorsteht, eine erste Drehmomentübertragungsfläche 114 auf, die unter einem spitzen Winkel zum Radius, auf dem die erste Ausnehmung 105 angeordnet ist, angeordnet ist. Dieser abgewandt ist eine zweite Drehmomentübertragungsfläche 112 vorgesehen, die annähernd parallel zu der Achse der ersten Ausnehmungen 105 verläuft. Zentral in einer Bohrung, die quer zu den ersten Ausnehmungen 105 verläuft, ist eine Stützanordnung vorgesehen, die einen an seinen beiden Enden mit Gewinde versehenen Bolzen 55 umfasst, auf welche Muttern 56 aufgeschraubt sind. Gegen diese stützen sich erste Federn 124 ab, deren anderes Ende sich jeweils gegen einen ersten Stützkörper 120 abstützt. Die ersten Stützkörper 120 stützen sich symmetrisch an entsprechenden Flächen am Fuß der ersten Mitnehmer 110 ab. Durch diese Anordnung werden die ersten Mitnehmer 110 in diametralen Richtungen auseinander zur Drehmomentübertragungsposition hin beaufschlagt.

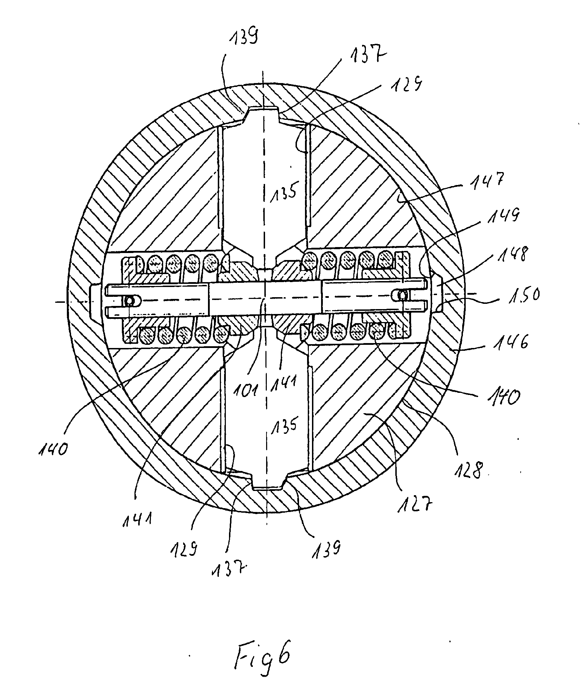

Es ist ferner eine zweite Kupplungsnabe 127 vorgesehen, die im Schnitt in Figur 6 dargestellt ist und eine zweite kreiszylindrische Außenfläche 128 besitzt, von der zweite Ausnehmungen 129 in Form von zylindrischen Bohrungen ausgehen. Es sind zwei zweite Ausnehmungen 129 vorgesehen, die eine gemeinsame Bohrungsachse aufweisen, welche radial zu der Längsachse 101 verläuft.

In den beiden zweiten Ausnehmungen 129 ist jeweils ein zweiter Mitnehmer 135 mit einer zylindrischen Außenfläche radial verstellbar bezüglich der Längsachse 101 aufgenommen. An seinem in Drehmomentübertragungsposition über die zweiten Außenfläche 128 vortretenden Kopf ist eine dritte Drehmomentübertragungsfläche 139 und dieser abgewandt eine vierte Drehmomentübertragungsfläche 137 vorgesehen. Die dritte Drehmomentübertragungsfläche 139 verläuft unter einem spitzen Winkel zur Bohrungsachse der zweiten Ausnehmungen 129.

An ihrem radial inneren Ende werden die beiden zweiten Mitnehmer 135 durch eine Stützanordnung abgestützt, die zwei zweite Stützkörper 141 umfasst, welche durch zwei zweite Federn 140, die auf einem Bolzen 55 sitzen, zur Einnahme der Drehmomentübertragungsposition hin beaufschlagt.

Die zweite Kupplungsnabe 127 weist eine zweite Anschlussbohrung 145 auf. Beide Kupplungsnaben, d.h. die erste Kupplungsnabe 102 und die zweite Kupplungsnabe 127 sind entlang der Längsachse 101 hintereinander in einer kreiszylindrischen Lagerbohrung 147 einer Kupplungshülse 146 aufgenommen. Diese weist in ihrer Lagerbohrung 147 parallel zur Längsachse 101 verlaufende Nuten 148 auf, die umfangsverteilt angeordnet sind und eine Stützfläche 149 aufweisen, die zur Abstützung der ersten Drehmomentübertragungsfläche 114 und der dritten Übertragungsfläche 139 dient, während ihre Seitenfläche 150 in der Drehmomentübertragungsposition in Anlage zu der zweiten Drehmomentübertragungsfläche 112 bzw. der vierten Drehmomentübertragungsfläche 137 kommt. Alle Nuten 148 sind identisch ausgebildet. Ihre Funktion entspricht der im Zusammenhang mit den Figuren 1 bis 3 beschriebenen. Dies bedeutet, dass bei Antrieb der ersten Kupplungsnabe 102 in Drehrichtung N1 von dieser das Drehmoment auf die beiden Mitnehmer 110 und von diesen über deren erste Drehmomentübertragungsflächen 114 auf die Stützflächen 149 der Nuten 148 und somit auf die Kupplungshülse 146 übertragen wird. Die Kupplungshülse 146 überträgt in Folge des Kontaktes zwischen der Seitenfläche 150 mit der vierten Drehmomentübertragungsfläche 137 eines Mitnehmers 136 in der zweiten Kupplungsnabe 127 das Drehmoment in voller Höhe auf die zweite Kupplungsnabe 127. Die weitere Funktion hinsichtlich des Abschaltens bei Drehmomentüberschreitung in Drehrichtung N1 sowie hinsichtlich der Drehmomentübertragung in Drehrichtung N2 entspricht ebenfalls voll der Funktion, wie sie im Zusammenhang der ersten Ausführungsform der Drehmomentübertragungskupplung gemäß Figuren 1 bis 3 beschrieben wurde.

Von besonderer Bedeutung bei beiden Ausführungsformen ist, dass bei gleicher Ausbildung der ersten und zweiten Kupplungsnaben sowie der diesen zugeordneten Mitnehmer unter Verwendung einer beiden gemeinsamen Kupplungshülse eine Drehmomentbegrenzung in zwei Antriebsdrehrichtungen erfolgen kann.

### Bezugszeichenliste

- 1, 101: Längsachse
- 2, 102: erste Kupplungsnabe
- 3: erste Stirnfläche
- 4: zweite Stirnfläche
- 5, 105: erste Ausnehmungen
- 6, 106: erste Außenfläche
- 7: erste Führungsflächen
- 8: erste Einlage
- 9: erste Stellachse
- 10, 110: erste Mitnehmer
- 11: erste Anlagefläche
- 12, 112: zweite Anlagefläche / zweite Drehmomentübertragungsfläche
- 13, 113: erste Kopffläche
- 14, 114: erste Drehmomentübertragungsfläche
- 15: Winkel
- 16: Winkel
- 17: Winkel
- 18: erste Beaufschlagungsfläche
- 19: zweite Beaufschlagungsfläche
- 20, 120: erster Stützkörper
- 21: erste Druckfläche
- 22: zweite Druckfläche
- 23: erste Bohrung
- 24, 124: erste Feder
- 25: erste Schraube
- 26, 126: erste Anschlussbohrung
- 27, 127: zweite Kupplungsnabe
- 28, 128: zweite Außenfläche
- 29, 129: zweite Ausnehmungen
- 30: dritte Stirnfläche
- 31: vierte Stirnfläche
- 32: zweite Führungsflächen
- 33: zweite Einlage
- 34: zweite Stellachse
- 35, 135: zweite Mitnehmer
- 36: dritte Anlagefläche
- 37, 137: vierte Anlagefläche / vierte Drehmomentübertragungsfläche
- 38: zweite Kopffläche
- 39, 139: dritte Drehmomentübertragungsfläche
- 40, 140: zweite Feder
- 41, 141: zweiter Stützkörper
- 42: zweite Bohrung
- 43: zweite Schraube
- 44: Trennscheibe
- 45, 145: zweite Anschlussbohrung
- 46, 146: Kupplungshülse
- 47, 147: Lagerbohrung
- 48, 148: Nut
- 49, 149: Stützfläche
- 50, 150: Seitenfläche
- 51: Fase
- 52: Stützscheibe
- 53: Sicherungsring
- 54: Dichtung
- 55: Bolzen
- 56: Mutter
- N1: erste Antriebsdrehrichtung
- N2: zweite Antriebsdrehrichtung

## Patentansprüche

1. Drehmomentbegrenzungskupplung, insbesondere für den Antrieb von oder für Antriebe in landwirtschaftlichen Geräten oder Arbeitsmaschinen, mit einer Längsachse (1, 101), und mit
- einer ersten Kupplungsnabe (2, 102),
mit einer ersten Außenfläche (6, 106),
die erste Ausnehmungen (5, 105) aufweist, die von der ersten Außenfläche (6, 106) ausgehen,
- einem ersten Mitnehmer (10, 110) je erster Ausnehmung (5, 105),
der in einer ersten Ausnehmung (5, 105) zwischen einer über die erste Außenfläche (6, 106) der ersten Kupplungsnabe (2, 102) vorstehenden Drehmomentübertragungsposition und einer in diese zurückgezogenen Abschaltposition verstellbar geführt ist und an seinem in Drehmomentübertragungsposition über die erste Außenfläche (6, 106) vortretenden Ende eine erste Drehmomentübertragungsfläche (14, 114) und dieser abgewandt eine zweite Drehmomentübertragungsfläche (12, 112) aufweist,
- mindestens einer ersten Feder (24, 124) je erstem Mitnehmer (10, 110), die diesen zur Einnahme seiner Drehmomentübertragungsposition beaufschlagt und die in der ersten Kupplungsnabe (2, 102) angeordnet ist,
**gekennzeichnet durch**
- eine zweite Kupplungsnabe (27, 127),
mit einer zweiten Außenfläche (28, 128),
die zweite Ausnehmungen (29, 129) aufweist, die von der zweiten Außenfläche (28, 128) ausgehen,
- einen zweiten Mitnehmer (35, 135) je zweiter Ausnehmung (29, 129),
der in einer zweiten Ausnehmung (29, 129) zwischen einer über die zweite Außenfläche (28, 128) vortretenden Drehmomentübertragungsposition und einer in die zweite Kupplungsnabe (27, 127) zurückgezogenen Abschaltposition verstellbar geführt ist, und an seinem über die zweite Außenfläche (28, 128) vortretenden Ende eine dritte Drehmomentübertragungsfläche (39, 139) und dieser abgewandt eine vierte Drehmomentübertragungsfläche (37, 137) aufweist,
- mindestens eine zweite Feder (40, 140) je zweitem Mitnehmer (35, 135), die diesen zur Einnahme der Drehmomentübertragungsposition beaufschlagt und die in der zweiten Kupplungsnabe (27, 127) aufgenommen ist,
- eine einzige Kupplungshülse (46, 146),
die eine Lagerbohrung (47, 147) aufweist, in der beide Kupplungsnaben (2, 27, 102, 127) entlang der Längsachse (1, 101) hintereinander mit ihren Außenflächen (6, 28, 106, 128) drehbar aufgenommen sind,
die in der Lagerbohrung (47, 147) entsprechend den ersten und zweiten Ausnehmungen (5, 29, 105, 129) der beiden Kupplungsnaben (2, 27, 102, 127) verteilt Nuten (48, 148) aufweist, die parallel zur Längsachse (1, 101) verlaufen und jeweils eine an die identisch ausgeführten ersten und dritten Drehmomentübertragungsflächen (14, 39, 114, 139) der ersten und zweiten Mitnehmer (10, 35, 110, 135) angepasste und sich über die Länge der Nut (48, 148) erstreckende Stützfläche (49, 149) aufweist und wobei die der Stützfläche (49) gegenüberliegende Seitenfläche (50, 150) der Nut (48, 148) an den Verlauf der identisch ausgebildeten zweiten Drehmomentübertragungsfläche (12, 112) der ersten Mitnehmer (10, 110) und der vierten Drehmomentübertragungsfläche (37, 137) der zweiten Mitnehmer (35, 135) angepasst ist.

2. Drehmomentbegrenzungskupplung nach Anspruch 1,
**dadurch gekennzeichnet,**
**dass** die ersten Mitnehmer (10, 110) und die zweiten Mitnehmer (35, 135) an ihren in den ersten bzw. zweiten Ausnehmungen (5, 29, 105, 129) angeordneten Enden jeweils zwei mit unterschiedlichen Winkeln (16, 17) angeordnete Beaufschlagungsflächen (18, 19) aufweisen und
**dass** je erstem und zweitem Mitnehmer (10, 35, 110, 135) ein Stützkörper (20, 41, 120, 141) mit zwei den Beaufschlagungsflächen (18, 19) entsprechenden Druckflächen (21, 22) vorgesehen ist, der zwischen der ersten bzw. zweiten Feder (24, 40, 124, 140) und dem zugehörigen ersten bzw. zweiten Mitnehmer (10, 35, 110, 135) der ersten bzw. zweiten Kupplungsnabe (2, 27, 102, 127) aufgenommen ist.

3. Drehmoment begrenzungskupplung nach Anspruch 1,
**dadurch gekennzeichnet,**
**dass** die ersten und zweiten Federn (24, 36, 124, 136) jeweils in einer Bohrung (23, 42) der zugehörigen ersten bzw. zweiten Kupplungsnabe (2, 27) aufgenommen sind und die Bohrungen (23, 42) zur zugehörigen ersten oder zweiten Ausnehmung (5, 29, 105, 129) offen sind.

4. Drehmomentbegrenzungskupplung nach Anspruch 2,
**dadurch gekennzeichnet,**
**dass** der Stützkörper (20, 41, 120, 141) in der ersten bzw. zweiten Ausnehmung (5, 29, 105, 129) aufgenommen ist.

5. Drehmomentbegrenzungskupplung nach Anspruch 1,
**dadurch gekennzeichnet,**
**dass** die Lagerbohrung (47) zu den Stützflächen (49) der Nuten (48) hin jeweils mit einer Fase (51) versehen ist.

6. Drehmomentbegrenzungskupplung nach Anspruch 1,
**dadurch gekennzeichnet,**
**dass** zwischen der ersten Kupplungsnabe (2) und der zweiten Kupplungsnabe (27) eine Trennscheibe (44) angeordnet ist.

7. Drehmomentbegrenzungskupplung nach Anspruch 1,
**dadurch gekennzeichnet,**
**dass** an den einander abgewandten Stirnflächen (3, 31) der ersten Kupplungsnabe (2) und der zweiten Kupplungsnabe (27) je eine Stützscheibe (52) angeordnet ist, die von einem an der Kupplungshülse (46) fixierten Sicherungsring (53) gehalten ist.

8. Drehmomentbegrenzungskupplung nach Anspruch 1,
**dadurch gekennzeichnet,**
**dass** die erste Kupplungsnabe (2, 102) und die zweite Kupplungsnabe (27, 127) jeweils mit einer eine Verzahnung aufweisenden Anschlussbohrung (26, 45, 126, 146) versehen sind.

9. Drehmomentbegrenzungskupplung nach Anspruch 1,
**dadurch gekennzeichnet,**
**dass** die ersten Ausnehmungen (5) und/oder die zweiten Ausnehmungen (29) schlitzartig gestaltet sind und parallel zur Längsachse (1) verlaufen,
und **dass** die ersten Mitnehmer (10) und/oder die zweiten Mitnehmer (35) entsprechend als flache längliche Schieber ausgebildet sind.

10. Drehmomentbegrenzungskupplung nach Anspruch 9,
**dadurch gekennzeichnet,**
**dass** die zweite Anlagefläche (12) die zweite Drehmomentübertragungsfläche und dass die vierte Anlagefläche (37) die vierte Drehmomentübertragungsfläche umfassen und jeweils als ebene Flächen gestaltet sind.

11. Drehmomentbegrenzungskupplung nach Anspruch 1,
**dadurch gekennzeichnet,**
**dass** zwei erste Mitnehmer (110) und/oder zwei zweite Mitnehmer (135) vorgesehen sind, die jeweils gemeinsam durch zentral angeordnete erste bzw. zweite Stützkörper (120, 141) beaufschlagt sind.

## Claims

1. Torque limiting coupling, especially for driving of or for drives in agricultural implements or machinery, having a longitudinal axis (1, 101),
and having
- a first coupling hub (2, 102),
having a first outer face (6, 106),
which has first recesses (5, 105), starting from the first outer face (6, 106),
- a first driving member (10, 110) for each first recess (5, 105),
which is guided displaceably in a first recess (5, 105) between a torque transmitting position projecting beyond the first outer face (6, 106) of the first coupling hub (2, 102) and a disconnected position retracted into the coupling hub (2, 102) and has at its end projecting in the torque transmitting position beyond the first outer face (6, 106) a first torque transmitting face (14, 114) and facing away from the first torque transmitting face (14, 114) a second torque transmitting face (12, 112),
- at least one first spring (24, 124) for each first driving member (10, 110), which loads it to take up its torque transmitting position and which is arranged in the first coupling hub (2, 102),
**characterised by**
- a second coupling hub (27, 127),
having a second outer face (28, 128),
which has second recesses (29, 129), which start from the second outer face (28, 128),
- a second driving member (35, 135) for each second recess (29, 129), which is guided displaceably in a second recess (29, 129) between a torque transmitting position projecting beyond the second outer face (28, 128) and a disconnected position retracted into the second coupling hub (27, 127), and at its end projecting beyond the second outer face (28, 128) has a third torque transmitting face (39, 139) and facing away therefrom a fourth torque transmitting face (37, 137),
- at least one second spring (40, 140) for each second driving member (35, 135), which loads it to take up the torque transmitting position and which is accommodated in the second coupling hub (27, 127),
- a single coupling sleeve (46, 146),
which has a bearing bore (47, 147), in which both coupling hubs (2, 27, 102, 127) are rotatably accommodated with their outer faces (6, 28, 106, 128) and one behind the other along the longitudinal axis (1, 101), which has in the bearing bore (47, 147) grooves (48, 148) distributed correspondingly to the first and second recesses (5, 29, 105, 129) of the two coupling hubs (2, 27, 102, 127) and which extend parallel to the longitudinal axis (1, 101) and have, respectively, a supporting face (49, 149) adapted to the identically formed first and third torque transmitting faces (14, 39, 114, 139) of the first and second driving members (10, 35, 110, 135) and extending over the length of the groove (48, 148) and wherein the side face (50, 150) of the groove (48, 148) arranged opposite to the supporting face (49) is adapted to the extension of the identically formed second torque transmitting face (12, 112) of the first driving member (10, 110) and the fourth torque transmitting face (37, 137) of the second driving member (35, 135).

2. Torque limiting coupling according to claim 1,
**characterised in that**
the first driving members (10, 110) and the second driving members (35, 135) have at their ends arranged in the first or second recesses (5, 29, 105, 129), respectively, two load faces (18, 19) arranged at different angles (16, 17) and **in that**
for each first and second driving member (10, 35, 110, 135) a supporting member (20, 41, 120, 141) with two pressure faces (21, 22) arranged correspondingly to the load faces (18, 19) is provided, which is received between the first or second spring (24, 40, 124, 140), respectively, and the corresponding first or second driving members (10, 35, 110, 135) of the first or second coupling hub (2, 27, 102, 127), respectively.

3. Torque limiting coupling according to claim 1,
**characterised in that**
the first and second springs (24, 36, 124, 136) are, respectively, received in a bore (23, 42) of the corresponding first or second coupling hub (2, 27) and that the bores (23, 42) are open towards the corresponding first or second recess (5, 29, 105, 129).

4. Torque limiting coupling according to claim 2,
**characterised in that**
the supporting member (20, 41, 120, 141) is received in the first or second recess (5, 29, 105, 129), respectively.

5. Torque limiting coupling according to claim 1,
**characterised in that**
the bearing bore (47) is provided with a chamfer (51) towards the supporting faces (49) of the grooves (48).

6. Torque limiting coupling according to claim 1,
**characterised in that**
between the first coupling hub (2) and the second coupling hub (27) a separating disc (44) is arranged.

7. Torque limiting coupling according to claim 1,
**characterised in that**
at the end faces (3, 31) of the first coupling hub (2) and, respectively, of the second coupling hub (27), facing away from each other, respectively, one supporting disc (52) is arranged, in which each supporting disc (52) is held by
a securing ring (53) fixed to the coupling sleeve (46).

8. Torque limiting coupling according to claim 1,
**characterised in that**
the first coupling hub (2, 102) and the second coupling hub (27, 127) are, respectively, provided with an attaching bore (26, 45, 126, 145) having a toothing.

9. Torque limiting coupling according to claim 1,
**characterised in that**
the first recesses (5) and/or the second recesses (29) are formed slot-like and extend parallel to the longitudinal axis (1),
and that the first driving members (10) and/or the second driving members (35) are formed correspondingly as plane elongated sliders.

10. Torque limiting coupling according to claim 9,
**characterised in that**
the second contact face (12) comprises the second torque transmitting face and that the fourth contact face (37) comprises the fourth torque transmitting face and are, respectively, formed as plane faces.

11. Torque limiting coupling according to claim 1,
**characterised in that**
two first driving members (110) and/or two second driving members (135) are provided, which, respectively, are loaded jointly by centrally arranged first or second supporting members (120, 141).

## Revendications

1. Accouplement à limitation de couple, en particulier pour l'entraînement de ou pour des entraînements dans des équipements agricoles ou des engins de travaux publics, avec un arbre longitudinal (1, 101), et avec
- un premier moyeu d'accouplement (2, 102),
avec une première surface extérieure (6, 106),
qui comporte des premiers creux (5, 105) qui partent de la première surface extérieure (6, 106),
- un premier toc d'entraînement (10, 110) pour chaque premier creux (5, 105),
qui est guidé de manière déplaçable dans un premier creux (5, 105) entre une position de transmission de couple en saillie au-dessus de la première surface extérieure (6, 106) du premier moyeu d'accouplement (2, 102) et une position de désaccouplement rétractée dans celui-ci et qui comporte, à son extrémité faisant saillie au-dessus de la première surface extérieure (6, 106) dans la position de transmission de couple, une première surface de transmission de couple (14, 114) et une deuxième surface de transmission de couple (12, 112) opposée à celle-ci,
- au moins un premier ressort (24, 124) pour chaque premier toc d'entraînement (10, 110) qui charge celui-ci pour qu'il prenne sa position de transmission de couple et qui est placé dans le premier moyeu d'accouplement (2, 102),
**caractérisé par**
- un deuxième moyeu d'accouplement (27, 127),
avec une deuxième surface extérieure (28, 128),
qui comporte des deuxièmes creux (29, 129) qui partent de la deuxième surface extérieure (28, 128),
- un deuxième toc d'entraînement (35, 135) pour chaque deuxième creux (29, 129),
qui est guidé de manière déplaçable dans un deuxième creux (29, 129) entre une position de transmission de couple en saillie au-dessus de la deuxième surface extérieure (28, 128) et une position de désaccouplement rétractée dans le deuxième moyeu d'accouplement (27, 127), et qui comporte, à son extrémité faisant saillie au-dessus de la deuxième surface extérieure (28, 128), une troisième surface de transmission de couple (39, 139) et une quatrième surface de transmission de couple (37, 137) opposée à celle-ci,
- au moins un deuxième ressort (40, 140) pour chaque deuxième toc d'entraînement (35, 135) qui charge celui-ci pour qu'il prenne la position de transmission de couple et qui est logé dans le deuxième moyeu d'accouplement (27, 127),
- un seul manchon d'accouplement (46, 146),
qui comporte un alésage de roulement (47, 147) dans lequel les deux moyeux d'accouplement (2, 27, 102, 127) sont logés en rotation l'un derrière l'autre avec leurs surfaces extérieures (6, 28, 106, 128) le long de l'arbre longitudinal (1, 101),
qui comporte des rainures (48, 148) réparties dans l'alésage de roulement (47, 147) en fonction des premiers et des deuxièmes creux (5, 29, 105, 129) des deux moyeux d'accouplement (2, 27, 102, 127), lesquelles rainures s'étendent parallèlement à l'arbre longitudinal (1, 101) et qui comporte une surface d'appui (49, 149) adaptée à la première et à la troisième surface de transmission de couple (14, 39, 114, 139), présentant une construction identique, des premiers et deuxièmes tocs d'entraînement (10, 35, 110, 135) et s'étendant sur la longueur de la rainure (48, 148) et la surface latérale (50, 150) de la rainure (48, 148) opposée à la surface d'appui (49, 149) étant adaptée au tracé de la deuxième surface de transmission de couple (12, 112), présentant une construction identique, des premiers tocs d'entraînement (10, 110) et de la quatrième surface de transmission de couple (37, 137) des deuxièmes tocs d'entraînement (35, 135).

2. Accouplement à limitation de couple selon la revendication 1,
**caractérisé en ce que**
à leurs extrémités disposées dans les premiers ou les deuxièmes creux (5, 29, 105, 129), les premiers tocs d'entraînement (10, 110) et les deuxièmes tocs d'entraînement (35, 135) comportent chacun deux surfaces de charge (18, 19) disposées selon des angles différents (16, 17) et
**en ce qu'**il est prévu un corps d'appui (20, 41, 120, 141) pour chaque premier et chaque deuxième toc d'entraînement (10, 35, 110, 135) avec deux surfaces de pression (21, 22) correspondant aux surfaces de charge (18, 19), qui est logé entre le premier ou le deuxième ressort (24, 40, 124, 140) et le premier ou le deuxième toc d'entraînement correspondant (10, 35, 110, 135) du premier ou du deuxième moyeu d'accouplement (2, 27, 102, 127).

3. Accouplement à limitation de couple selon la revendication 1,
**caractérisé en ce que**
les premiers et deuxièmes ressorts (24, 36, 124, 136) sont logés chacun dans un alésage (23, 42) du premier ou du deuxième moyeu d'accouplement correspondant (2, 27) et les alésages (23, 42) sont ouverts vers le premier ou le deuxième creux correspondant (5, 29, 105, 129).

4. Accouplement à limitation de couple selon la revendication 2,
**caractérisé en ce que**
le corps d'appui (20, 41, 120, 141) est logé dans le premier ou dans le deuxième creux (5, 29, 105, 129).

5. Accouplement à limitation de couple selon la revendication 1,
**caractérisé en ce que**
l'alésage de roulement (47) est muni d'un chanfrein (51) en direction des surfaces d'appui (49) des rainures (48).

6. Accouplement à limitation de couple selon la revendication 1,
**caractérisé en ce que**
un disque de séparation (44) est disposé entre le premier moyeu d'accouplement (2) et le deuxième moyeu d'accouplement (27) .

7. Accouplement à limitation de couple selon la revendication 1,
**caractérisé en ce que**
un disque d'appui (52), qui est retenu par une rondelle d'arrêt (53) fixée au manchon d'accouplement (46), est disposé sur les faces frontales (3, 31) opposées l'une à l'autre du premier moyeu d'accouplement (2) et du deuxième moyeu d'accouplement (27).

8. Accouplement à limitation de couple selon la revendication 1,
**caractérisé en ce que**
le premier moyeu d'accouplement (2, 102) et le deuxième moyeu d'accouplement (27, 127) sont munis chacun d'un alésage de raccordement (26, 45, 126, 146) comportant une denture.

9. Accouplement à limitation de couple selon la revendication 1,
**caractérisé en ce que**
les premiers creux (5) et/ou les deuxièmes creux (29) sont configurés en forme de fente et s'étendent parallèlement à l'arbre longitudinal (1),
et **en ce que** les premiers tocs d'entraînement (10) et/ou les deuxièmes tocs d'entraînement (35) sont configurés de manière correspondante sous forme de coulisseaux plats oblongs.

10. Accouplement à limitation de couple selon la revendication 9,
**caractérisé en ce que**
la deuxième surface d'appui (12) contient la deuxième surface de transmission de couple et **en ce que** la quatrième surface d'appui (37) contient la quatrième surface de transmission de couple et **en ce qu'**elles sont configurées chacune comme des surfaces planes.

11. Accouplement à limitation de couple selon la revendication 1,
**caractérisé en ce que**
il est prévu deux premiers tocs d'entraînement (110) et/ou deux deuxièmes tocs d'entraînement (135) qui sont chargés en commun par des premiers ou deuxièmes corps d'appui (120, 141) disposés au centre.
